# FASCICULE DE BREVET EUROPEEN

(11) **EP 2 018 755 B1**
(45) Date de publication et mention de la délivrance du brevet: **03.06.2015**
(21) Numéro de dépôt: 07731959.8
(22) Date de dépôt: 27.04.2007
(51) Int. Cl.: H04L 29/06, H04L 12/46

(54) **MÉTHODE DE TRANSFERT DE FICHIER SÉCURISÉ**
SICHERES DATEITRANSFERVERFAHREN
SECURE FILE TRANSFER METHOD

(30) Priorité: 17.05.2006 FR 0651783
(43) Date de publication de la demande: 28.01.2009
(73) Titulaire: AIRBUS OPERATIONS, 31060 Toulouse (FR)
(72) Inventeur: SAINT-ETIENNE, Jean-François, 31270 Cugnaux (FR)
(74) Mandataire: Ilgart, Jean-Christophe
(86) Numéro de dépôt international: PCT/FR2007/051186
(87) Numéro de publication internationale: WO 2007/132107

(56) Documents cités:
- US-A1- 2002 080 791
- US-A1- 2003 182 404
- US-A1- 2004 193 732
- US-A1- 2005 220 029
- US-A1- 2005 243 836
- HOYME K ET AL: "ARINC 629 AND SAFEBUS*: DATA BUSES FOR COMMERCIAL AIRCRAFT" SCIENTIFIC HONEYWELLER, HONEYWELL'S CORPORATE. MINNEAPOLIS, US, vol. 11, no. 1, 21 septembre 1991 (1991-09-21), pages 57-70, XP000289742 ISSN: 0196-8440

## Description

### DOMAINE TECHNIQUE

La présente invention concerne le domaine des systèmes de télécommunication embarqués, notamment à bord d'un aéronef.

### ÉTAT DE LA TECHNIQUE ANTÉRIEURE

Depuis peu, certaines compagnies aériennes offrent à leurs passagers des services de télécommunication en vol, notamment la possibilité d'accéder à Internet et d'envoyer/recevoir des courriers électroniques via une liaison satellitaire. Pour ce faire, la cabine de l'avion est équipée d'un réseau câblé de type Ethernet ou d'un réseau WLAN (IEEE 802.11b/g) auquel les passagers peuvent se connecter de manière conventionnelle. On trouvera par exemple la description d'un tel système de communication dans la demande internationale WO00/14987.

Les pilotes, le personnel de maintenance et le personnel naviguant disposent également de terminaux de contrôle reliés au réseau embarqué. Il est apparu nécessaire, pour des raisons de sécurité évidentes, de partitionner le réseau en une zone non sécurisée et une zone sécurisée, les passagers pouvant accéder à la première mais non à la seconde. La zone sécurisée comprend notamment les systèmes d'information et de contrôle de l'avion situés dans le cockpit et dans la baie avionique. Elle est protégée par des moyens classiques de contrôle physique d'accès.

Une manière simple et connue d'interdire l'accès à une zone sécurisée d'un réseau embarqué est de prévoir que les liaisons entre la zone sécurisée et la zone non sécurisée seront unidirectionnelles.

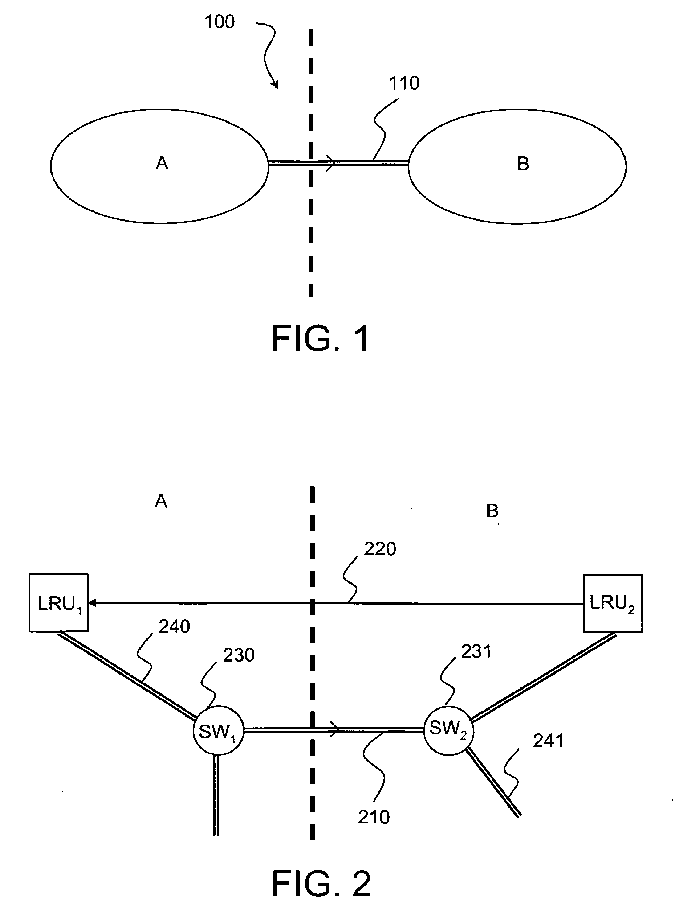

La Fig. 1 illustre schématiquement un réseau embarqué 100 partitionné en une zone sécurisée A et une zone non sécurisée B. Les liaisons 110 sont des liaisons unidirectionnelles de A vers B, par exemple des liaisons Ethernet utilisant un câblage à une seule paire torsadée correspondant au sens de communication de A vers B. Si un tel système garantit efficacement la sécurité de la zone A, il possède néanmoins deux inconvénients majeurs. Tout d'abord, il interdit définitivement toute communication de la zone B vers la zone A. Ensuite, pour un transfert de données de la zone A vers la zone B, l'équipement destinataire ne peut renvoyer d'accusé de réception vers l'équipement qui les a transmises. Ceci est incompatible avec la plupart des protocoles de communication courants et prive de surcroît l'équipement source de toute garantie quant au bon déroulement du transfert.

L'objet de la présente invention est de proposer un système de télécommunication embarqué, partitionné en une zone sécurisée et une zone non sécurisée, qui offre des possibilités de communication bidirectionnelle entre les deux zones sans réduire sensiblement la protection de la zone sécurisée.

### EXPOSÉ DE L'INVENTION

La présente invention est définie par un système de télécommunication embarqué, partitionné en une zone sécurisée et une zone non sécurisée, comprenant au moins un premier équipement de télécommunication dans la zone sécurisée, un second équipement de télécommunication dans la zone non sécurisée, et une première liaison unidirectionnelle du premier au second équipement, ledit premier équipement étant adapté à transmettre des données sur ladite première liaison selon un premier protocole. Le système comprend une seconde liaison du second au premier équipement, conforme à un second protocole dont les deux premières couches sont distinctes de celles du premier protocole, ledit second équipement étant adapté a transmettre des données sur la seconde liaison sous forme de messages conformes au premier protocole et encapsulés dans des trames conformes au second protocole.

Avantageusement, les deux premières couches du premier protocole sont celles d'Ethernet. Par exemple, la pile du premier protocole est TFTP/UDP/IP/Ethernet.

Selon un premier mode de réalisation les deux premières couches du second protocole sont celles d'AFINC 429.

Selon un second mode de réalisation, les deux premières couches du second protocole sont celles de CAN.

### BREVE DESCRIPTION DES DESSINS

D'autres caractéristiques et avantages de l'invention apparaîtront à la lecture d'un mode de réalisation préférentiel de l'invention fait en référence aux figures jointes parmi lesquelles :
La Fig. 1 illustre schématiquement un réseau embarqué connu de l'état de la technique ;
La Fig. 2 illustre schématiquement un système de télécommunication embarqué selon un premier mode de réalisation de l'invention ;
La Fig. 3 illustre le protocole de communication entre un équipement de la zone sécurisée et un équipement de la zone non sécurisée ;
La Fig. 4 illustre schématiquement un système de télécommunication embarqué selon un deuxième mode de réalisation de l'invention ;
La Fig. 5 illustre schématiquement un système de télécommunication embarqué selon un troisième mode de réalisation de l'invention ;
La Fig. 6 représente une trame utilisée sur une liaison obéissant au protocole ARINC 429.

### EXPOSÉ DÉTAILLÉ DE MODES DE RÉALISATION PARTICULIERS

Une première idée à la base de l'invention est de prévoir une liaison de retour de la zone non sécurisée vers la zone sécurisée obéissant à un protocole (dénommé ci-après second protocole), dont les deux premières couches sont distinctes de celles du protocole utilisé pour une communication de la zone sécurisée vers la zone non sécurisée (dénommé ci-après premier protocole).

Une seconde idée à la base de l'invention est d'utiliser pour la transmission de données un protocole de transfert de fichier simple et robuste dont tous les messages de commande sont issus de la zone sécurisée.

La Fig. 2 illustre schématiquement un système de télécommunication embarqué selon l'invention.

On a noté LRU₁ et LRU₂ des équipements de télécommunication appartenant respectivement à la zone sécurisée A et à la zone non sécurisée B. Les sous-réseaux correspondant aux zones A et B sont des réseaux Ethernet commutés et/ou partagés. Par exemple, le sous-réseau de la zone A pourra être un réseau AFDX (*Avionics Ful1 Duplex Switched Ethernet*) dont on trouvera une description dans le document « CES White Paper on AFDX » disponible sur le site www.ces.ch. Les liaisons Ethernet des zones A et B, telles que les liaisons 240 et 241, peuvent être de type full-duplex. En revanche, chaque liaison Ethernet allant de la zone A à la zone B, telle que la liaison 210, est nécessairement de type simplex.

Selon l'invention, chaque liaison allant de la zone B à la zone A, telle que la liaison 220 obéit à un protocole distinct de celui des liaisons 210, par exemple au protocole ARINC 429 couramment utilisé dans le domaine aéronautique. Le protocole ARINC 429 normalise la couche physique ainsi que la couche de liaison. Il utilise une paire de fils torsadée et une transmission unidirectionnelle, choisie ici de B vers A.

Alternativement, les liaisons allant de la zone B à la zone A seront conformes au protocole CAN (*Control Area Network*) répandu dans le domaine automobile. La couche liaison et certains aspects dé la couche physique du protocole CAN sont normalisés dans la norme ISO 11898-1. Ce protocole prévoit une transmission de type half-duplex sur une simple paire de fils. En pratique, dans le cadre de la présente invention, seule la transmission de la zone B à la zone A sera utilisée.

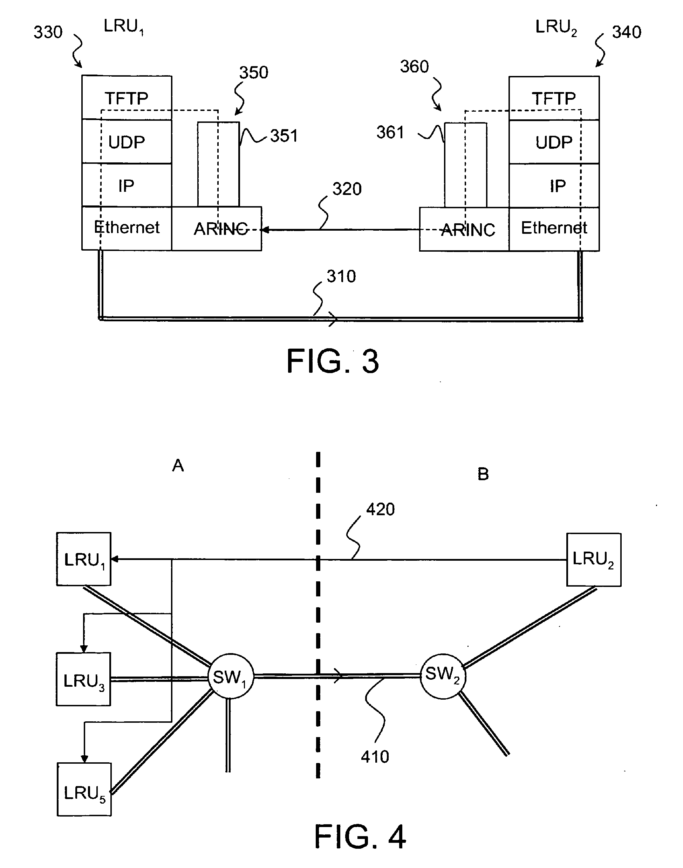

La Fig. 3 représente les piles des protocoles mis en oeuvre dans le système de télécommunication selon un mode de réalisation de l'invention. L'équipement LRU₁ utilise une première pile de protocole 330 pour transmettre sur la liaison Ethernet unidirectionnelle 310 et une seconde pile de protocole 350 pour recevoir des données sur la liaison de retour, ici une liaison 320 conforme au protocole ARINC 429. Symétriquement, l'équipement LRU₂ utilise une première pile de protocole 340 pour recevoir des données sur la liaison Ethernet 310 et une seconde pile de protocole 360 pour en transmettre sur la liaison 320.

Avantageusement, les premières piles de protocole 330 et 340 sont constituées par TFTP/UDP/IP/Ethernet. On rappelle que TFTP (*Trivial File Transfer* Protocol) est un protocole de transfert de fichier, normalisé par l'IETF. On pourra en trouver une description exhaustive dans RFC 1350 sous www.ietf.org/rfc/rfc783.txt.

Lorsque l'équipement LRU₁ veut transmettre un fichier de données à LRU₂, la couche TFTP ouvre une session temporaire au moyen d'une commande d'écriture (WRQ) et découpe le fichier en blocs de 512 octets. Les blocs sont transmis à la couche de transport UDP après concaténation avec un en-tête TFTP. La couche UDP fournit un service de niveau message, sans connexion ni reprise sur erreur, connu de l'homme du métier. Les datagrammes IP du message sont ensuite transmis de manière conventionnelle dans des trames Ethernet. A la réception, les données traversent en sens inverse la pile de protocole 340. Pour chaque message TFTP reçu, l'équipement LRU₂ transmet un message d'acquittement, conformément à la norme RFC 1350, ce message étant encapsulé dans des trames ARINC 429, comme indiqué en 360 et détaillé plus loin. Les trames ARINC sont transmises de manière conventionnelle sur la liaison 320 et le message est décapsulé en 351. Ainsi, pour la couche TFTP des piles 330 et 340, tout se passe comme si le transport se faisait sur un réseau IP au moyen de liaisons full-duplex.

Lorsque l'équipement LRU₂ doit transmettre un fichier de données à LRU₁, une session temporaire est ouverte à l'initiative de LRU₁ au moyen d'une commande de lecture (RRQ). Le fichier à transmettre est découpé en blocs de 512 octets par la couche TFTP de la pile 340 et les blocs sont concaténés avec les en-tête TFTP correspondants. Les messages TFTP ainsi obtenus sont encapsulés dans des trames ARINC, comme indiqué en 361 et détaillé plus loin. Les trames ARINC sont transmises de manière conventionnelle sur la liaison 320 et décapsulés en 351. L'équipement LRU₁ transmet alors un message d'acquittement via la pile 330, la liaison Ethernet simplex 310. Le message d'acquittement chemine dans le sens inverse à travers la pile de protocole 340. Là encore, pour la couche TFTP des piles 330 et 340, tout se passe comme si le transport se faisait sur un réseau IP au moyen de liaisons full-duplex.

La liaison ARINC 320 et le mécanisme d'encapsulation des messages du premier protocole dans des trames du second protocole forment une barrière d'accès à la zone sécurisée.

L'équipement LRU₂ de la zone non sécurisée est installé à demeure dans l'aéronef, par exemple sous la forme d'un serveur proxy auquel les terminaux des passagers peuvent se connecter. Dans ce cas, la passerelle de conversion, qui réalise l'encapsulation des messages TFTP, est située dans ledit serveur.

La Fig. 4 illustre schématiquement un système de télécommunication embarqué selon un deuxième mode de réalisation de l'invention. A la différence du premier mode de réalisation, plusieurs équipements de la zone sécurisée LRU₁, LRU₃, LRU₅ peuvent communiquer avec un équipement LRU₂ de la zone non sécurisée. Pour ce faire, une liaison ARINC 420 de type multicast fait office de voie de retour vers les équipements en question. On rappelle qu'une liaison ARINC ne peut être connectée qu'à un émetteur mais peut desservir jusqu'à vingt récepteurs.

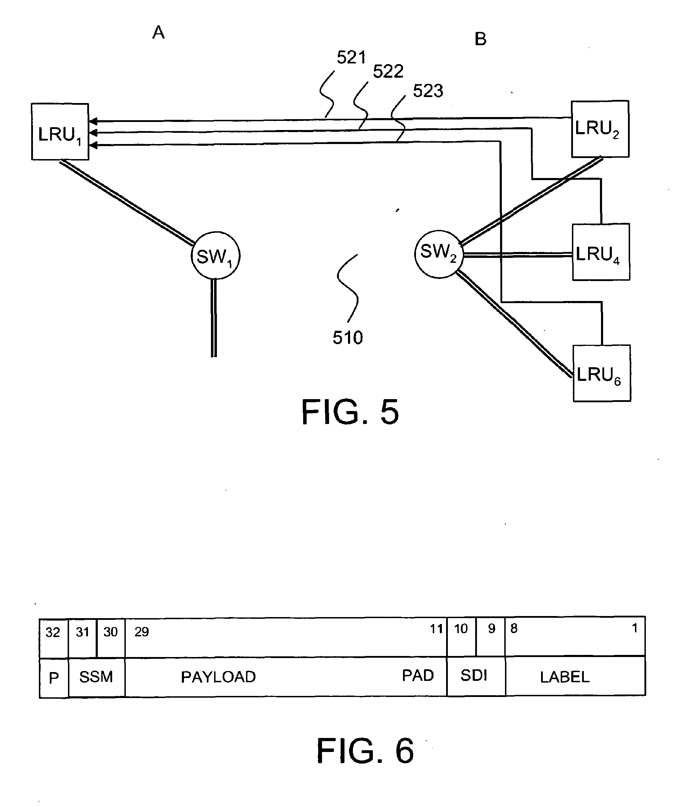

La Fig. 5 illustre schématiquement un système de télécommunication embarqué selon un troisième mode de réalisation de l'invention. A la différence des premier et second modes de réalisation, un équipement de la zone sécurisée, tel que LRU₁, peut ici communiquer avec une pluralité d'équipements de la zone non sécurisée LRU₂,LRU₄,LRU₆. Pour ce faire, l'équipement LRU₁ comporte une pluralité d'interfaces ARINC 429. Une pluralité de liaisons ARINC 521,522,523 connectant respectivement les équipements LRU₂, LRU₄, LRU₆ auxdites interfaces font office de voies de retour. Dans ce mode de réalisation, on pourra avantageusement utiliser un bus CAN à la place de liaisons ARINC, un bus CAN pouvant être relié à une pluralité d'émetteurs.

Il est clair pour l'homme du métier que les second et troisième modes de réalisation peuvent être avantageusement combinés en un quatrième mode de réalisation pour permettre à une pluralité d'équipements de la zone sécurisée de communiquer avec une pluralité d'équipements de la zone non sécurisée. Dans ce cas, plusieurs liaisons ARINC de type multicast font office de voies de retour vers les équipements de la zone sécurisée. Selon une variante, un bus CAN assure la fonction de retour entre les équipements de la zone non sécurisée et ceux de la zone sécurisée.

Les modes de réalisation envisagés ci-dessus font appel à un mécanisme d'encapsulation des messages TFTP dans des trames du second protocole, par exemple ARINC 429. On trouvera une description détaillée du protocole ARINC 429 dans l'article intitulé « ARINC Protocol Tutorial » disponible sur le site www.condoreng.com.

La Fig. 6 représente schématiquement une trame ARINC. Elle est constituée d'un mot de 32 bits comportant cinq champs. Le bit P est un bit de parité. Le champ SSM indique le statut de fonctionnement de l'équipement. Le champ PAYLOAD de 19 bits contient la charge utile, complétée le cas échéant par des bits de bourrage (PAD). Le champ SDI permet d'identifier le destinataire de la trame en cas de transmission multicast. Enfin, le champ LABEL indique le paramètre avionique correspondant à la charge utile et le format des données qui la composent.

Nous envisagerons ci-après les messages TFTP qui peuvent être transmis après encapsulation sur la voie de retour, à savoir ACK, DATA, ERROR.

En référence à la Fig. 3, lorsque l'équipement LRU₁ veut transmettre un fichier de données à l'équipement LRU, il lui transmet un message de commande d'écriture (WRQ). Si LRU₂ est prêt à recevoir le fichier, il renvoie à LRU₁ un message d'acquittement. Ensuite, pour chaque message reçu contenant un bloc de données du fichier, l'équipement LRU₂ renvoie à LRU₁ un message d'acquittement indiquant le numéro du bloc reçu. La fin de fichier est détectée par la couche TFTP de la pile 140, lorsqu'il reçoit un bloc de moins de 512 octets. Le premier message pour l'acquittement de la commande d'écriture indique conventionnellement le numéro de bloc 0. Lorsque l'équipement LRU₁ transmet un bloc de données, la couche TFTP de la pile 330 arme un temporisateur. Si un message d'acquittement n'est pas reçu avant le terme de la temporisation, le bloc de données est transmis à nouveau au moyen d'un message TFTP.

Le message d'acquittement ACK du protocole TFTP comprend un premier champ Opcode de deux octets identifiant le type de message (Opcode=4) et un second champ de deux octets donnant le numéro du bloc dont la réception est acquittée. Le module d'encapsulation 361 range dans une trame du second protocole le second octet de Opcode (le premier octet étant toujours nul pour un message d'acquittement), puis les deux octets de numéro de bloc. Il concatène à ce message les numéros de ports UDP des équipements source (LRU₁) et destinataire (LRU₂) utilisés pour le transfert des données. Chaque numéro de port UDP étant codé sur un octet, 7 octets doivent être transmis pour un message d'acquittement, ce qui nécessite 3 trames ARINC ou une seule trame CAN.

Lorsque l'équipement LRU₁ souhaite recevoir un fichier de données de l'équipement LRU₂, il lui transmet une commande de lecture RRQ. Si ce dernier est prêt à transmettre, il lui transmet directement en guise d'acquittement le premier bloc de 512 octets du fichier en question. L'équipement LRU₁ transmet en retour un message d'acquittement ACK du premier bloc. Le processus se poursuit comme précédemment jusqu'à la transmission du dernier bloc du fichier. Si la couche TFTP de la pile 340 ne reçoit pas un acquittement dans un temps donné après la transmission d'un bloc, il réitère sa transmission.

Un message de données, DATA, du protocole TFTP comprend un premier champ Opcode de deux octets identifiant le type de message (Opcode=3), un second champ de deux octets donnant le numéro du bloc transmis et un champ de n octets avec 0≤n≤512 dans lequel est stocké le bloc de données.

Le module d'encapsulation 361 range dans une trame du second protocole le second octet de Opcode (le premier octet est toujours nul pour un message de données), puis les deux octets de numéro du bloc transmis et enfin les n octets du bloc en question. Le module 361 concatène à ce message les numéros de ports UDP des équipements source (LRU₁) et destinataire (LRU₂) utilisés pour le transfert des données. Ainsi pour la transmission d'un bloc de n octets de données, n+7 octets doivent être transmis ce qui nécessite E[(n+7).8/19]+1 trames ARINC, où E[x] donne la partie entière de x, et n+7 trames CAN.

Si une requête d'écriture (WRQ) ou de lecture (RRQ) transmise par LRU₁ ne peut être accordée par LRU₂, ou si une erreur intervient pendant le transfert de données, un message d'erreur est transmis par la couche TFTP de la pile 340.

Le message d'erreur, ERROR, du protocole TFTP comprend un premier champ Opcode de deux octets identifiant le type de message (Opcode=5), un second champ de deux octets contenant le code de l'erreur diagnostiquée et éventuellement un troisième champ contenant une chaîne ASCII décrivant l'erreur, suivi d'un octet nul. Il ne sera pas fait usage ici de ce troisième champ.

Le module d'encapsulation 361 range dans une trame du second protocole le second octet de Opcode (le premier octet est toujours nul pour un message d'erreur), puis les deux octets du code d'erreur. Le module 361 concatène enfin à ce message les numéros de ports UDP des équipements source (LRU₁) et destinataire (LRU₂) utilisés pour le transfert des données. Ainsi pour la transmission d'un message d'erreur, 5 octets doivent être transmis ce qui nécessite 3 trames ARINC ou 5 trames CAN.

Lorsque l'équipement LRU₂ est relié à une pluralité d'équipements de la zone sécurisée, comme dans le second mode de réalisation, le module d'encapsulation 361 détermine la valeur du champ SID de la trame ARINC en fonction de la destination du message TFTP.

Toutefois, si le système utilise un second protocole ne permettant pas de distinguer les destinataires d'un message TFTP, le module 361 concaténera avantageusement au message encapsulé l'adresse IP de l'équipement destinataire.

De même, si une pluralité d'équipements de la zone non sécurisée sont reliés à un équipement de la zone sécurisée, comme dans le troisième mode de réalisation et si le système utilise un second protocole ne permettant pas à un équipement destinataire d'un message TFTP de déterminer l'équipement source qui l'a transmis, chaque module 361 concaténera avantageusement au message encapsulé l'adresse IP de l'équipement source.

De manière générale, dans le cas du quatrième mode de réalisation, chaque module 361 concaténera au message encapsulé les adresses IP respectives de l'équipement source et de l'équipement destinataire du message TFTP.

## Revendications

1. Système de télécommunication embarqué, partitionné en une zone sécurisée (A) et une zone non securisée (B), comprenant au moins un premier équipement (LRU1) de télécommunication dans la zone sécurisée, un second équipement (LRU2) de télécommunication dans la zone non sécurisée, et une première liaison unidirectionnelle (300) du premier au second équipement, ledit premier équipement étant adapté à transmettre des données sur ladite première liaison (310) selon un premier protocole, **caractérisé en ce qu'**il comprend une seconde liaison (320) du second (LRU2) au premier équipement (LRU1), conforme à un second protocole dont les couches de niveau physique et de niveau liaison sont distinctes de celles du premier protocole, ledit second équipement (LRU2) étant adapté à transmettre des données sur la seconde liaison (320) sous forme de messages conformes au premier protocole et encapsulés dans des trames conformes au second protocole.

2. Système de télécommunication embarqué selon la revendication 1, **caractérisé en ce que** les couches de niveau physique et de niveau liaison du premier protocole sont celles d'Ethernet.

3. Système de télécommunication embarqué selon la revendication 2, **caractérisé en ce que** la pile du premier protocole est TFTP/UDP/IP/Ethernet.

4. Système de télécommunication embarqué selon l'une des revendications précédentes, **caractérisé en ce que** les couches de niveau physique et de niveau liaison du second protocole sont celles d'ARINC 429.

5. Système de télécommunication embarqué selon l'une des revendications 1 à 3, **caractérisé en ce que** les couches de niveau physique et de niveau liaison du second protocole sont celles de CAN.

6. Système de télécommunication embarqué selon les revendications 3 et 4, **caractérisé en ce que** le second équipement comprend un module d'encapsulation adapté à encapsuler un message du protocole TFTP, notamment ACK, ERROR, DATA dans des trames ARINC 429.

7. Système de télécommunication embarqué selon la revendication 6, **caractérisé en ce que** ledit module d'encapsulation est adapté à concaténer audit message TFTP les ports UDP utilisés pour transférer les données entre les premier et second équipements.

8. Système de télécommunication embarqué selon la revendication 6 ou 7, **caractérisé en ce que** ledit module d'encapsulation est adapté à concaténer audit message TFTP l'adresse IP de l'équipement destinataire dudit message TFTP et/ou l'adresse IP de l'équipement source dudit message.

9. Aéronef comprenant un système de télécommunication embarqué selon l'une des revendications précédentes.

## Patentansprüche

1. Bordeigenes Telekommunikationssystem, das in einen gesicherten Bereich (A) und einen nicht gesicherten Bereich (B) partitioniert ist, umfassend mindestens eine erste Telekommunikationsvorrichtung (LRU₁) in dem gesicherten Bereich, eine zweite Telekommunikationsvorrichtung (LRU₂) in dem ungesicherten Bereich und eine erste unidirektionale Verbindung (310) von der ersten zu der zweiten Vorrichtung, wobei die erste Vorrichtung dazu eingerichtet ist, Daten auf der ersten Verbindung (310) gemäß einem ersten Protokoll zu übertragen, **dadurch gekennzeichnet, dass** es eines zweite Verbindung (320) von der zweiten (LRU₂) zu der ersten Vorrichtung (LRU₁) gemäß einem zweiten Protokoll umfasst, dessen Schichten auf physikalischer und auf Verbindungsebene sich von denjenigen des ersten Protokolls unterscheiden, wobei die zweite Vorrichtung (LRU₂) dazu eingerichtet ist, Daten auf der zweiten Verbindung (320) in Form von Mitteilungen gemäß dem ersten Protokoll und in Rahmen gekapselt gemäß dem zweiten Protokoll zu übertragen.

2. Bordeigenes Telekommunikationssystem nach Anspruch 1, **dadurch gekennzeichnet, dass** die Schichten auf physikalischer und auf Verbindungsebene des ersten Protokolls diejenigen des Ethernets sind.

3. Bordeigenes Telekommunikationssystem nach Anspruch 2, **dadurch gekennzeichnet, dass** der Stapel des ersten Protokolls aus TFTP/UDP/IP/Ethernet besteht.

4. Bordeigenes Telekommunikationssystem nach einem der vorhergehenden Ansprüche, **dadurch gekennzeichnet, dass** die Schichten auf physikalischer und auf Verbindungsebene des zweiten Protokolls diejenigen des ARINC 429 sind.

5. Bordeigenes Telekommunikationssystem nach einem der Ansprüche 1 bis 3, **dadurch gekennzeichnet, dass** die Schichten auf physikalischer und auf Verbindungsebene des zweiten Protokolls diejenigen des CAN sind.

6. Bordeigenes Telekommunikationssystem nach einem der Ansprüche 3 und 4, **dadurch gekennzeichnet, dass** die zweite Vorrichtung ein Verkapselungsmodul umfasst, das dazu eingerichtet ist, eine Mitteilung des TFTP-Protokolls, insbesondere ACK, ERROR, DATA in ARINC-Rahmen 429 zu verkapseln.

7. Bordeigenes Telekommunikationssystem nach Anspruch 6, **dadurch gekennzeichnet, dass** das Verkapselungsmodul dazu eingerichtet ist, die UDP-Ports (Anschlüsse) an die TFTP-Mitteilung anzuhängen, die zum Übertragen der Daten zwischen der ersten und der zweiten Vorrichtung verwendet werden.

8. Bordeigenes Telekommunikationssystem nach Anspruch 6 oder 7, **dadurch gekennzeichnet, dass** das Verkapselungsmodul dazu eingerichtet ist, die IP-Adresse der Empfangsvorrichtung der TFTP-Mitteilung und/oder die IP-Adresse der Quell-Vorrichtung der Mitteilung an die TFTP-Mitteilung anzuhängen.

9. Flugzeug, ein bordeigenes Telekommunikationssystem nach einem der vorhergehenden Ansprüche aufweisend.

## Claims

1. An on-board telecommunication system, partitioned into a secure area (A) and a non secure area (B), comprising at least a first telecommunication equipment unit (LRU₁) in the secure area, a second telecommunication equipment unit (LRU₂) in the non secure area, and a first one-way link (310) from the first to the second equipment unit, said first equipment unit being adapted for transmitting data on said first link (310) according to a first protocol, **characterized in that** it includes a second link (320) from the second (LRU₂) to the first equipment unit (LRU₁), in accordance with a second protocol, the physical and link level layers of which are distinct from those of the first protocol, said second equipment unit (LRU₂) being adapted for transmitting data on the second link (320) as messages in accordance with the first protocol and encapsulated in frames in accordance with the second protocol.

2. The on-board telecommunication system according to claim 1, **characterized in that** the physical and link level layers of the first protocol are Ethernet layers.

3. The on-board telecommunication system according to claim 2, **characterized in that** the stack of the first protocol is TFTP/UDP/IP/Ethernet.

4. The on-board telecommunication system according to any of the preceding claims, **characterized in that** the physical and link level layers of the second protocol are ARINC 429 layers.

5. The on-board telecommunication system according to any of claims 1 to 3, **characterized in that** the physical and link level layers of the second protocol are CAN layers.

6. The on-board telecommunication system according to claims 3 and 4, **characterized in that** the second equipment unit includes an encapsulation module adapted for encapsulating a message of the TFTP protocol, namely ACK, ERROR, DATA, in ARINC 429 frames.

7. The on-board telecommunication system according to claim 6, **characterized in that** said encapsulation module is adapted to concatenate with said TFTP message the UDP ports used for transferring data between the first and second equipments.

8. The on-board telecommunication system according to claim 6 or 7, **characterized in that** said encapsulation module is adapted to concatenate with said TFTP message the IP address of the destination equipment of said TFTP message and/or the IP address of the source equipment of said message.

9. An aircraft comprising an on-board telecommunication system according to any of the preceding claims.
